# DEMANDE DE BREVET EUROPEEN

(11) **EP 1 462 283 A1**
(43) Date de publication de la demande: **29.09.2004**
(21) Numéro de dépôt: 04290812.9
(22) Date de dépôt: 26.03.2004
(51) Int. Cl.: B60H 1/34, F24F 13/06

(54) **Aérateur pour habitacle de véhicule, notamment d'automobile**

(30) Priorité: 28.03.2003 FR 0303837
(71) Demandeur: Key Plastics Interiors, 17300 Rochefort sur Mer (FR)
(72) Inventeur: Bourreau, Guy, 17450 Fouras (FR)
(74) Mandataire: Lemoine, Robert

(57) **Abrégé**

L'invention concerne un aérateur pour introduire de l'air dans un habitacle de véhicule, notamment d'automobile.
Cet aérateur comprend un corps tubulaire (1) comportant une extrémité externe débouchant dans l'habitacle et pourvue d'ouies (5) s'étendant entre des déflecteurs (6) conformés pour dévier latéralement l'air envoyé dans l'habitacle.

## Description

La présente invention concerne un aérateur pour introduire de l'air dans un habitacle de véhicule, notamment d'automobile.

Lorsque les aérateurs des véhicules automobiles sont utilisés pour introduire un volume d'air important dans l'habitacle, il arrive fréquemment qu'ils émettent des jets d'air relativement intenses en direction du conducteur et/ou du passager avant.

Ces jets d'air ont malheureusement l'inconvénient de provoquer une sensation désagréable d'inconfort pour la personne située sur leur trajectoire.

La présente invention se propose de remédier à cet inconvénient et, pour ce faire, elle a pour objet un aérateur destiné à introduire de l'air dans un habitacle de véhicule, notamment d'automobile, cet aérateur étant caractérisé en ce qu'il comprend un corps tubulaire comportant une extrémité externe débouchant dans l'habitacle et pourvue d'ouies s'étendant entre des déflecteurs conformés pour dévier latéralement l'air envoyé dans l'habitacle.

Les passagers du véhicule ne se trouvent donc plus sur la trajectoire des courants d'air sortant de l'aérateur et éprouvent ainsi une sensation de confort bien plus grande que dans les véhicules actuels.

Selon un mode de réalisation particulier de l'invention, le corps tubulaire a une section circulaire, tandis que les ouies et les déflecteurs sont de préférence répartis annulairement entre la périphérie et la partie centrale de l'extrémité externe du corps tubulaire.

Afin d'assurer une répartition latérale plus uniforme de l'air introduit dans l'habitacle du véhicule, les ouies et les déflecteurs peuvent avantageusement être équidistants angulairement.

Dans le mode de réalisation particulier ci-dessus, la partie centrale de l'extrémité externe du corps tubulaire comprend de préférence un élément de paroi comportant une dépression conique.

Grâce à cet élément de paroi, les déflecteurs disposent d'un support de taille relativement grande au niveau de la partie centrale de l'aérateur, ce qui permet à ce dernier d'avoir une structure très rigide.

Par ailleurs, les déflecteurs ont de préférence une partie terminale externe située au niveau de l'extrémité externe du corps tubulaire, leurs parties terminales externes se chevauchant partiellement et s'étendant dans une direction perpendiculaire ou pratiquement perpendiculaire à l'axe longitudinal du corps tubulaire.

En raison de leur disposition particulière, les déflecteurs obligent l'air sortant des ouies à se propager latéralement sous la forme d'un rideau uniforme et à demeurer à distance des passagers.

De préférence, les faces visibles des parties terminales externes des déflecteurs sont légèrement concaves, ce qui permet d'incurver légèrement la trajectoire de l'air sortant des ouies et de diriger celui-ci dans une zone de l'habitacle plus proche du conducteur et/ou du passager avant.

Afin d'assurer une diffusion de l'air sur une grande étendue, les bords libres des parties terminales externes des déflecteurs peuvent être arrondis et s'étendre entre la périphérie et la partie centrale de l'extrémité externe du corps tubulaire.

Par ailleurs, les déflecteurs peuvent avantageusement comporter une partie terminale interne située à l'intérieur du corps tubulaire, leurs parties terminales internes formant un angle aigu avec l'axe longitudinal de ce dernier.

Les pertes de charge au niveau de l'aérateur peuvent ainsi être très faibles.

Etant donné que l'aérateur selon l'invention est destiné à être fabriqué en grande quantité, il est avantageusement réalisé d'une seule pièce en matière plastique.

Un mode d'exécution de la présente invention sera décrit ci-après à titre d'exemple nullement limitatif en référence aux dessins annexés dans lesquels :
- la figure 1 est une vue de face schématique d'un aérateur conforme à l'invention, cet aérateur étant installé sur le tableau de bord d'une automobile ;
- la figure 2 est une vue en coupe selon la ligne II-II de la figure 1;
- la figure 3 est une vue de côté de l'aérateur visible sur la figure 1 ;
- la figure 4 est une vue en perspective partielle de cet aérateur, une ligne de coupe permettant de voir la partie terminale interne des déflecteurs ; et
- la figure 5 est une vue en perspective schématique de l'aérateur.

L'aérateur qui est représenté sur les dessins a été conçu pour être installé sur le tableau de bord d'une automobile.

Il va de soi cependant que l'on ne sortirait pas du cadre de la présente invention si cet aérateur était installé sur le panneau intérieur d'une portière ou sur tout autre support situé dans l'habitacle de l'automobile. Il pourrait également être utilisé pour diffuser de l'air dans un habitacle de véhicule de transport en commun, par exemple un wagon ou un avion.

L'aérateur représenté comprend un corps tubulaire 1 comprenant un tronçon cylindrique 2 prolongé d'un côté par un tronçon tronconique 3 dont la grande base est située au niveau d'un orifice ménagé dans le tableau de bord 4.

Le tronçon 3 constitue l'extrémité externe du corps tubulaire, c'est-à-dire l'extrémité qui débouche dans l'habitacle de l'automobile.

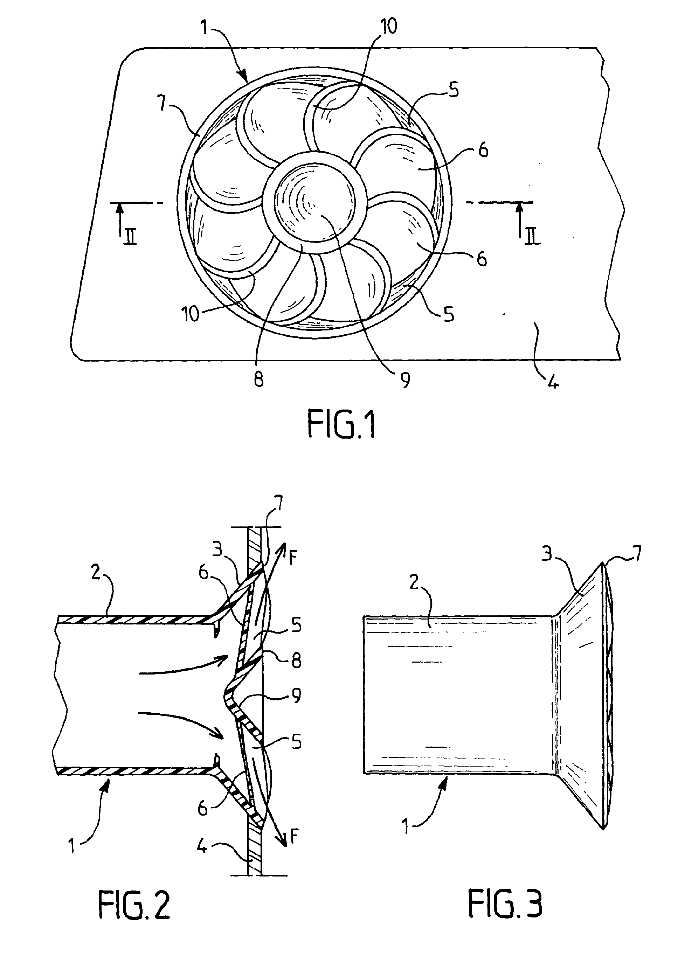

Il est pourvu d'ouies 5 s'étendant entre des déflecteurs 6 conformés pour que l'air, à sa sortie des ouies 5, soit dévié latéralement dans le sens des flèches F représentées sur la figure 2 et ne vienne pas gêner le conducteur et/ou le passager avant.

Comme on peut le voir sur les figures 1 et 5, les ouies 5 et les déflecteurs 6 sont répartis annulairement entre la périphérie 7 et la partie centrale 8 de la grande base du tronçon 3.

Comme le montre la figure 2, la partie centrale 8 est constituée par un élément de paroi comportant une dépression conique 9 et dont le rôle sera précisé ci-après.

Afin de réaliser une répartition uniforme de l'air sortant de l'aérateur, les ouies 5 et les déflecteurs 6 sont respectivement équidistants angulairement.

Par ailleurs, les parties terminales externes des déflecteurs, qui sont situées au niveau de la grande base du tronçon 3, se chevauchent partiellement et s'étendent dans une direction pratiquement perpendiculaire à l'axe longitudinal du corps 1, comme cela ressort notamment de la figure 2.

Dans le mode de réalisation représenté, les faces visibles des parties terminales externes des déflecteurs 6 sont légèrement concaves.

Grâce à cette concavité, l'air sortant des ouies 5 s'éloigne légèrement du tableau de bord 4 pour venir dans une zone située autour de la personne assise devant l'aérateur sans toutefois atteindre cette personne.

Par ailleurs, les bords libres 10 des parties terminales externes des déflecteurs 6 sont arrondis et s'étendent entre la périphérie 7 et l'élément de paroi 8.

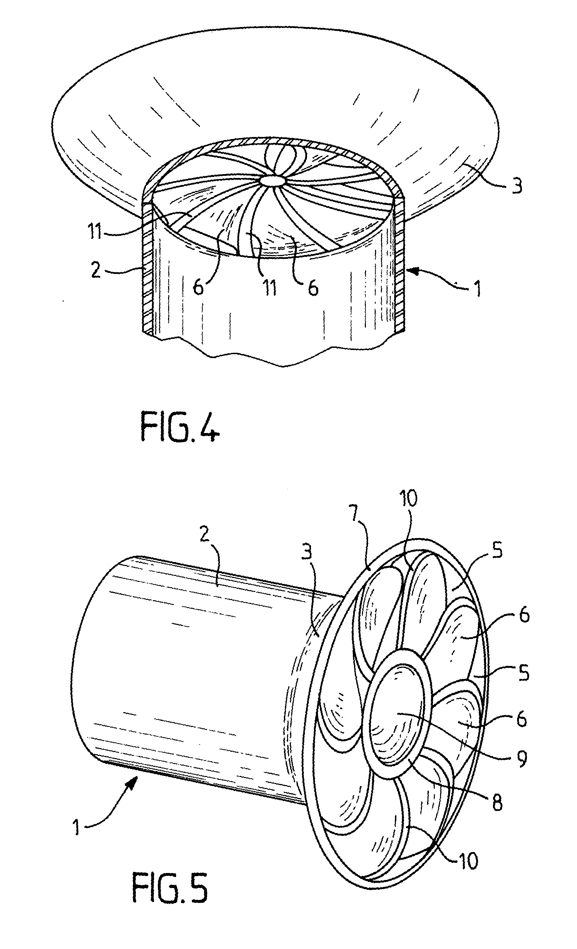

En se référant maintenant à la figure 4, on remarquera que les déflecteurs 6 ont une partie terminale interne 11 située approximativement au niveau de la jonction des tronçons 2 et 3 du corps tubulaire 1 et formant un angle aigu avec l'axe longitudinal de ce dernier.

L'air qui circule dans le corps 1 pour parvenir dans l'habitacle de l'automobile n'est donc pas gêné dans son déplacement par les déflecteurs.

On précisera ici que les déflecteurs ont une courbure ne comportant pas de variation brusque de leur partie terminale interne à leur partie terminale externe et assurent ainsi un guidage régulier de l'air.

On précisera également que l'élément de paroi 8 supporte les déflecteurs dans la partie centrale de l'aérateur et permet à celui-ci d'être réalisé avec une structure très résistante.

Enfin, on indiquera que l'aérateur est de préférence réalisé d'une seule pièce en matière plastique, ce qui permet de diminuer son prix de revient et son poids.

Le corps 1 de l'aérateur est destiné à être relié d'une manière connue en soi à l'installation de climatisation de l'automobile, installation qui comprend des moyens de commande permettant de régler la vitesse et la température de l'air envoyé dans l'habitacle.

Cette installation et ces moyens de commande sont de conception conventionnelle et n'ont donc pas à être décrits ici.

Il ressort de la description qui vient d'être donnée que l'aérateur selon l'invention permet de créer une diffusion judicieuse de l'air dans l'habitacle de sorte que la personne située au voisinage de cet aérateur n'éprouve pas de sensation d'inconfort, même lorsque l'air pénètre dans l'habitacle à grande vitesse.

## Revendications

1. Aérateur pour introduire de l'air dans un habitacle de véhicule, notamment d'automobile, comprenant un corps tubulaire (1) qui comporte une extrémité externe débouchant dans l'habitacle et qui est pourvu d'ouïes (5) s'étendant entre des déflecteurs (6), chaque déflecteur ayant une partie terminale externe située au niveau de l'extrémité externe du corps tubulaire, **caractérisé en ce que** les parties terminales externes des déflecteurs (6) se chevauchent partiellement et s'étendent dans une direction perpendiculaire ou pratiquement perpendiculaire à l'axe longitudinal du corps tubulaire (1) pour ainsi dévier latéralement l'air envoyé dans l'habitacle.

2. Aérateur selon la revendication 1, **caractérisé en ce que** le corps tubulaire (1) comprend un tronçon tronconique (3) dont la grande base constitue son extrémité externe, les ouïes (5) et les déflecteurs (6) étant situés dans le tronçon tronconique (3).

3. Aérateur selon la revendication 1 ou 2, **caractérisé en ce que** le corps tubulaire (1) a une section circulaire.

4. Aérateur selon l'une quelconque des revendications 1 à 3, **caractérisé en ce que** les ouies (5) et les déflecteurs (6) sont répartis annulairement entre la périphérie (7) et la partie centrale (8) de l'extrémité externe du corps tubulaire (1).

5. Aérateur selon l'une quelconque des revendications 1 à 4, **caractérisé en ce que** les ouies (5) et les déflecteurs (6) sont équidistants angulairement.

6. Aérateur selon l'une quelconque des revendications 1 à 5, **caractérisé en ce que** la partie centrale (8) de l'extrémité externe du corps tubulaire (1) comprend un élément de paroi comportant une dépression conique (9).

7. Aérateur selon l'une quelconque des revendications 1 à 6, **caractérisé en ce que** les faces visibles des parties terminales externes des déflecteurs (6) sont légèrement concaves.

8. Aérateur selon l'une quelconque des revendications 1 à 7, **caractérisé en ce que** les bords libres (10) des parties terminales externes des déflecteurs (6) sont arrondis et s'étendent entre la périphérie (7) et la partie centrale (8) de l'extrémité externe du corps tubulaire (1).

9. Aérateur selon l'une quelconque des revendications 1 à 8, **caractérisé en ce que** les parties terminales internes (11) des déflecteurs (6) forment un angle aigu avec l'axe longitudinal du corps tubulaire (1).

10. Aérateur selon l'une quelconque des revendications 1 à 9, **caractérisé en ce qu'**il est réalisé d'une seule pièce en matière plastique.
